# EUROPEAN PATENT SPECIFICATION

(11) **EP 2 981 172 B1**
(45) Date of publication and mention of the grant of the patent: **11.10.2017**
(21) Application number: 14715694.7
(22) Date of filing: 18.03.2014
(51) Int. Cl.: A22C 17/00, B02C 18/36

(54) **FLEXIBLE CUTTING BLADES**
FLEXIBLES SCHNEIDMESSER
LAME DE COUPE FLEXIBLE

(30) Priority: 03.04.2013 IT RM20130192
(43) Date of publication of application: 10.02.2016
(73) Proprietor: Evolution S.r.l., 40069 Zola Predosa (Bo) (IT)
(72) Inventor: QUADRANA, Marcello, I-40069 Zola Predosa (BO) (IT)
(74) Representative: Fiammenghi, Eva
(86) International application number: PCT/IB2014/059930
(87) International publication number: WO 2014/162221

(56) References cited:
- BE-A- 502 689
- DE-A1- 3 414 375
- DE-C- 515 085
- DE-C- 566 193
- DE-C- 647 684
- DE-C- 722 984
- FR-A- 433 903

## Description

### Prior art

The field of cutting blades, and especially the field of cutting blades for processing animal meat, offers a multiplicity of techniques that allow optimizing the use of the cutting blades. Many of the techniques currently known and patented, however, have the fault of using cutting blades that operate rigidly against the animal meat to be treated. In summary, according to the technique described in the prior art, the frozen animal meat that must be cut or ground is pressed, usually by means of a screw, against a plurality of blades which by impacting rigidly against the meat cut it and reduce it into increasingly smaller pieces. The cutting occurs in a conventional manner, however, i.e. by pushing the animal meat to be processed against the cutting blades which rotate supported by an extremely solid and rigid metal structure. The rigidity of the blades system, together with the consistency of the frozen meat to be processed, create high friction which in addition to causing the undesired heating of the meat, causes a significant consumption of the blades themselves which are therefore considerably worn, dispersing large quantities of the metals that constitute them within the processed meat itself. Document DE 722 984 C discloses a support structure for cutting knives provided with a central hole adapted to receive the rotation axis, a circular solid structure peripheral to said central hole and radial supports adapted to receive at least one cutting V-shaped knife. However, the wear of the cutting blades, the pollution of the processed meat with the metals constituting the blades and the heating of the meat itself with the consequent degradation of the proteins contained therein are problems that are still unresolved. Various approaches have been attempted to solve the aforesaid problems, but all of such solutions have always been directed only towards the creation of cutting apparatuses and systems that are increasingly rigid and provided with high-resistance blades. Such solutions have only marginally solved the problems, substantially increasing however the costs of said systems.

### Description of the invention

The present invention intends to resolve all of the aforesaid problems by describing an innovative cutting blades structure that prevents or at least drastically reduces the wear of the blades, the pollution of the processed meat with the metals constituting the blades themselves and the heating of the treated meat with the consequent degradation of the proteins contained therein. The attainment of all of these ambitious objectives is reached by approaching the problem in a totally new manner. At the base of the present invention, there is the innovative concept of rendering the cutting blades more elastic. In substance, the present invention intends to describe an innovative cutting system for animal meat that allows the constituent blades to slightly bend and deform when compressed against the meat to be treated. This controlled deformation allows drastically reducing the tip loads and hence the wear of the blades themselves as well as the pollution of the processed meat with the metals present in the blades. In addition, the present invention allows preventing the degradation of the proteins contained in the meat, considerably reducing the heating of the meat itself during the processing step. All these advantages are achieved due to the use of an innovative cutting blade provided with a V-shaped form. The innovative cutting blade, being hinged on its support only by the vertex of said "V", allows the two diverging cutting ends to acquire the elasticity necessary for solving all the aforesaid problems. In addition, in order to further increase the deformability of the blades, slits filled with a silicone plastic polymer are placed thereon, which also serve to increase the deformability of the system.

### Brief description of the drawings

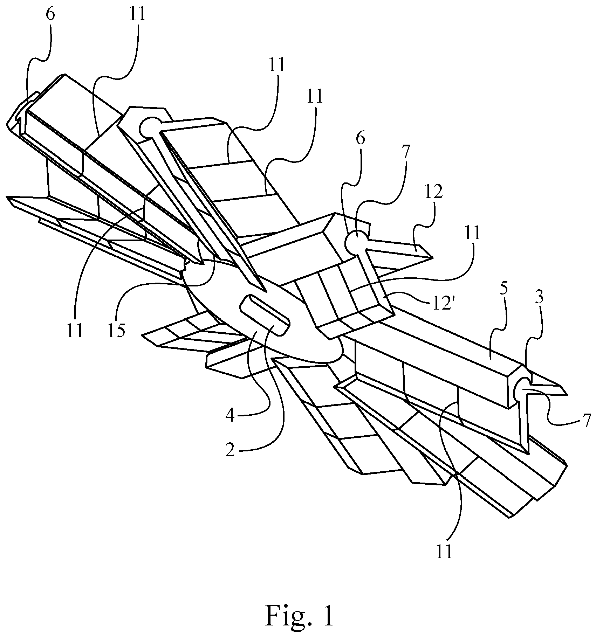

FIGURE 1: shows the entire cutting system in which the following are observed:
   the structure 1 for cutting knives with the central hole 2 adapted to receive the rotation axis 10, the circular solid structure 4 peripheral to said central hole 2, the plurality of radial supports for knives 5 stably connected through the point of connection 15 to said circular solid structure 4, the semicircular groove 6 adapted to receive at its interior the circular portion 7 of the cutting knife 8, the V-shaped structure constituted by the two blades 12 and 12' stably joined to each other by said circular portion 7 and finally the slit 11, filled with an elastic plastic polymer that partially traverses the body of the blades 12 and 12';

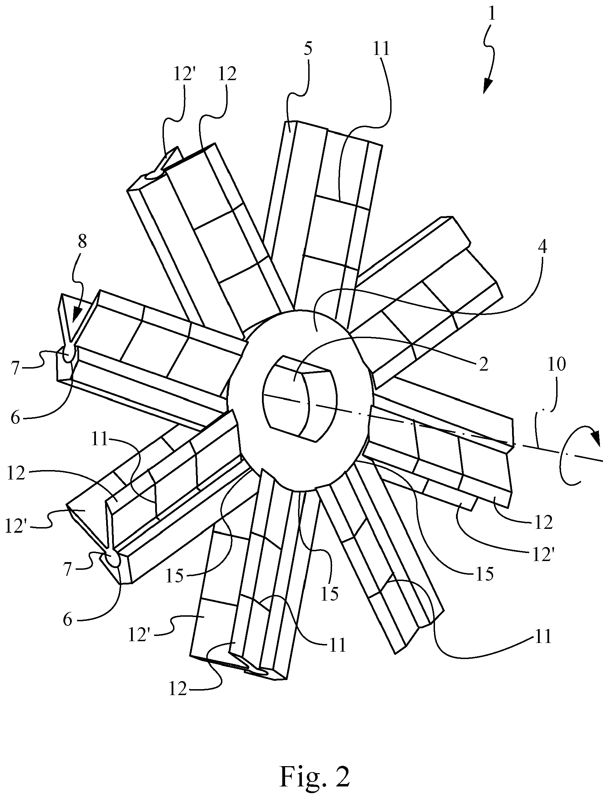

FIGURE 2: is a further view of the structure 1 for cutting knives in which the slits 11 are clearly observed; such slits can partially or completely traverse the entire thickness of the blades 12 and 12';

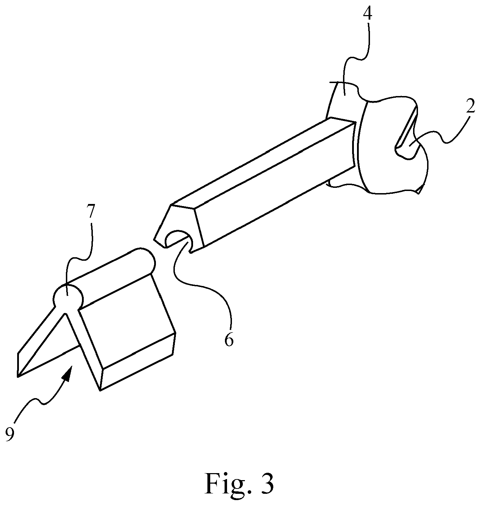

FIGURE 3: is a perspective view of the cutting knife 8 according to the present invention, in which the semicircular groove 6 is observed that is adapted to receive the circular portion 7. If one intends on modifying the consistency of the cutting knives 8 as a function of their distance from the circular solid structure 4, it is possible to progressively insert, within the semicircular groove 6, a plurality of knives 9 one after the other. It is also observed that each radial support 5 is stably connected with the circular solid structure 4;

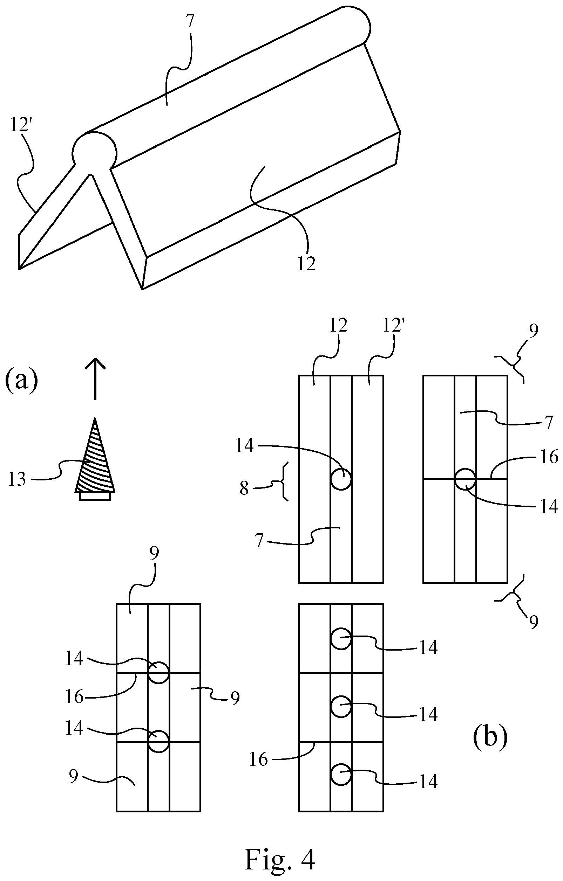

FIGURE 4: is a front perspective view of some of the components of the present cutting structure in a particular embodiment thereof. More in detail, figure 4 shows the case in which the cutting structure is provided with at least one conical screw 13 to be inserted in a suitable housing 14 placed in the circular portion 7 joining the blades 12 and 12' of a knife 8, both in the case in which the latter defines a single body and in that in which said knife 8 is formed by the association of two or more knives 9. The insertion of the conical screw(s) 13 in the suitable housing 14 and its following screwing cause the opening of the blades 12 and 12', conferring to the latter a certain level of rigidity/flexibility, which may be requested for certain meat processing conditions. More in detail, figure 4 (a) shows that the insertion of the conical screw 13 occurs in the space portion in which the blades 12 and 12' define the acute angle. Figure 4(b) shows some of the possible locations of the housings 14 in the circular portion 7, in the case in which the latter constitutes a single body as well as in the case in which it can be modulated, as in the case of associating two or more knives 9. Observing the figure in question, it is observed that said housing(s) 14 can be found at the center of the circular portion 7 of each knife 8, or at the center of the joint(s) 16 present between two or more coupled knives 9, or at the center of the circular portion 7 of each knife 9.

### Description of the preferred embodiments

The present invention will now be described in detail according to the preferred embodiments thereof, and in particular according to the embodiments that provide for the use of the aforesaid cutting system when applied to the processing of pork meat for obtaining mortadella. In a first embodiment, the entire structure 1 for knives according to the present invention is made to rotate due to the action of an axis 10 which, traversing the central hole 2 and being fixed to the circular solid structure 4 peripheral to said central hole 2, allows rotating the circular solid structure 4 to which a plurality, normally from four to twenty, preferably eight radial supports 5 for knives are connected. The radial supports 5 are stably connected to the circular solid structure 4 through the point of connection 15. Said radial supports 5 for knives are regularly and radially arranged around the circular solid structure 4 and are characterized by a triangular or trapezoidal section, provided on one side with at least one semicircular groove 6 which uniformly follows the entire length of each single radial support 5. Within said semicircular groove 6, the circular portion 7 of the cutting knife 8 is inserted. The insertion occurs from the distal end of the radial support 5, which is that opposite the point of connection 15. The cutting knife 8 is constituted overall by at least two blades 12 and 12' connected together for an entire side. This connection originates a structure with substantially V-shaped form, in which the vertex of the "V" represents the circular portion 7 which is inserted, being of slightly smaller diameter, within the semicircular groove 6. Naturally, the size of the semicircular groove 6 is such to perfectly receive the circular portion 7, allowing an easy insertion thereof and a just as easy extraction, when one intends to substitute the entire cutting knife 8. The particular characteristic of having at least two blades 12 and 12' connected together for one side, and given that said side is inserted in the radial support structure 5, allows having the two cutting blades 12 and 12' partially free. This freedom allows them to be able to be deformed as a function of the stresses that are created from time to time by the frozen meat to be treated. Naturally, the greater the distance between the circular portion 7, i.e. the distance of the vertex of the "V" that joins the two blades 12 and 12', and the cutting edge of said blades, the greater the elasticity and flexibility of the blades themselves and hence the lower the wear thereof during the cutting step. In order to further increase the elasticity and the deformability of the blades 12 and 12' on each blade, at least one slit 11 is provided, adapted to further dampen the impact between the meat and the blade itself. Said slit 11 can partially or completely traverse the blade 12 and can have a transverse, oblique or parallel progression with respect to the groove 6. In the case in which the aforesaid slits 11 completely traverse the thickness of the blade 12, the latter will thus be constituted by a plurality of blades made integral with each other only by means of the circular portion 7. Alternatively, each cutting knife 8, constituted by at least two blades 12 and 12' joined to each other by the circular portion 7, is composed of a plurality of cutting knives 9, superimposed and stacked by means of their circular portion 7 within the semicircular groove 6. The divarication angle and the thickness of the two blades 12 and 12' is selected at the time of attainment of the cutting knife 8 in order to optimize the yield as a function of the type of meat to be treated and as a function of the distance from the point of connection 15 in which the cutting knife 8 will be positioned. The structure 1 according to the present invention can have the circular portion 7 of the cutting knife 8 locked within the semicircular groove 6 due to at least one common stop screw 3.

In another embodiment of the invention, still in order to enhance the flexibility of the blades 12 and 12' of the present cutting system, and its versatility according to the type and quantity of the meat to be treated, said cutting system comprises at least one screw 13 which allows regulating the opening of the blades 12 and 12' of each knife as well as their flexibility/rigidity. More in detail, in another embodiment of the present invention, the knives 8, both in the case in which they comprise a plurality of knives 9, and in the case in which they are formed by a single body, are provided with screws 13 to be screwed at suitable housings 14 placed on the circular portion 7 of the blades 12 and 12'. More in detail, said circular portion 7, both in the case in which it is in modulatable form and when it represents a single body, has at least one housing 14 and preferably three housings 14 accessible to the screws 13 from the space portion in which said blades 12 and 12' define the acute angle.

Still in more detail, in this embodiment the meat cutting system comprises conical screws 13 which, by virtue of their particular conical form, allow regulating the opening of the blades 12 and 12', as well as their rigidity/flexibility, when screwed into their housing(s) 14. As already mentioned, in this embodiment it is possible to encounter a single conical screw 13 to be inserted into a suitable housing 14 placed at the center of the portion 7 of each knife 8, or, in the case in which the blades 12 and 12' are formed by the association of two knives 9, to be inserted in a housing 14 placed at the center of the joint 16 between said knives 9, or in the case in which the blades 12 and 12' are formed by the association of three knives 9, it is possible to encounter two conical screws 13 to be inserted, one in a housing 14 placed at the center of a joint 16, the other in a housing 14 placed at the center of the remaining joint 16. Alternatively, three conical screws 13 can be encountered, to be inserted in suitable housings 14 placed at the center of the circular portion 7 of each single knife 9.

## Claims

1. Structure (1) for cutting knives provided with a central hole (2) adapted to receive the rotation axis (10), a circular solid structure (4) peripheral to said central hole (2), a plurality of radial supports for knives (5) stably connected through the point (15) of connection to said circular solid structure (4), said radial supports for knives (5) being adapted to receive at least one cutting knife (8) said cutting knife (8) having a V-shaped structure constituted by at least two blades (12 and 12') joined to each other by a circular portion (7), wherein said radial supports for knives (5) are provided along the length thereof with at least one semicircular groove (6) adapted to receive therein the circular portion (7) of at least one cutting knife (8), said circular portion (7) and each blade (12 and 12') being provided with at least one slits (11) which partly traverses the body of said blades (12 and 12').

2. Structure (1) according to the preceding claims wherein on the blades (12 and 12') of the cutting knife (8), the slits (11) completely traverse the entire thickness of the blades (12 and 12') generating a plurality of independent blades joined together for the circular portion (7) alone.

3. Structure (1) according to the preceding claims wherein the cutting knives (8) can be modulated, said knives (8) comprising a plurality of knives (9) within the longitudinal groove (6) so as to be able to progressively insert more than one into each longitudinal groove (6).

4. Structure (1) according to the preceding claims wherein the slit (11), regardless of the depth thereof, perpendicularly traverses, transversely or obliquely, the blade (12) or the blade (12') of the cutting knife (8).

5. Structure (1) according to the preceding claim wherein the slit (11) is filled with a plastic polymer, possibly silicone.

6. Structure (1) according to the preceding claims wherein the circular portion (7) of the cutting knife (8) is locked within the semicircular groove (6) due to at least one common stop screw (3).

7. Structure (1) according to claim 2 or 3 wherein the single portions of blades (12 and 12') identified by the slits (11) have a different thickness and consistency.

8. Structure (1) according to any one of the preceding claims, **characterized in that** it comprises at least one circular portion (7) having at least one housing (14) adapted for the insertion of at least one conical screw (13), both in the case in which the knife (8) represents a single body, and **in that** in which it can be modulated, said housing(s) (14) being at the centre of the circular portion (7) and/or at the centre of at least one joint (16) present between two consecutive knives (9).

9. Structure (1) according to the preceding claim, **characterized in that** the housing(s) (14) of the conical screw(s) (13) is accessible to the latter from the space portion in which the blades (12 and 12') define the acute angle.

## Patentansprüche

1. Struktur (1) für Schneidmesser, versehen mit einer zentralen Öffnung (2), die dazu angepasst ist, die Rotationsachse (10) aufzunehmen, einer kreisförmigen, stabilen Struktur (4), peripher um die zentrale Öffnung (2) herum, einer Vielzahl von radialen Halterungen für Messer (5), fest durch den Verbindungspunkt (15) mit der kreisförmigen, stabilen Struktur (4) verbunden, wobei die radialen Halterungen für Messer (5) dazu angepasst sind, mindestens ein Schneidmesser (8) aufzunehmen, wobei das Schneidmesser (8) eine V-förmige Struktur aufweist, die durch mindestens zwei Klingen (12 und 12'), welche durch einen kreisförmigen Abschnitt (7) miteinander verbunden sind, gebildet ist, wobei die radialen Halterungen für Messer (5) entlang deren Länge versehen sind mit mindestens einer halbkreisförmigen Nut (6), die dazu angepasst ist, darin den kreisförmigen Abschnitt (7) mindestens eines Schneidmessers (8) aufzunehmen, wobei der kreisförmige Abschnitt (7) und jede Klinge (12 und 12') mit mindestens einem Schlitz (11), welcher den Körper der Klingen (12 und 12') teilweise durchsetzt, versehen sind.

2. Struktur (1) nach den vorhergehenden Ansprüchen, wobei auf den Klingen (12 und 12') des Schneidmessers (8) die Schlitze (11) die gesamte Dicke der Klingen (12 und 12') vollständig durchsetzen, indem sie eine Vielzahl von unabhängigen, miteinander verbundenen Klingen für den kreisförmigen Abschnitt (7) allein erzeugen.

3. Struktur (1) nach den vorhergehenden Ansprüchen, wobei die Schneidmesser (8) anpassbar sind, wobei die Messer (8) eine Vielzahl von Messern (9) innerhalb der länglichen Nut (6) aufweisen, um zu ermöglichen, mehr als eines in jede längliche Nut (6) nacheinander einzusetzen.

4. Struktur (1) nach den vorhergehenden Ansprüchen, wobei der Schlitz (11), unabhängig von dessen Tiefe, querlaufend oder schräg, die Klinge (12) oder die Klinge (12') des Schneidmessers (8) senkrecht durchsetzt.

5. Struktur (1) nach den vorhergehenden Ansprüchen, wobei der Schlitz (11) mit einem Kunststoff-Polymer, möglicherweise Silikon gefüllt ist.

6. Struktur (1) nach den vorhergehenden Ansprüchen, wobei der kreisförmige Abschnitt (7) des Schneidmessers (8) aufgrund mindestens einer üblichen Anschlagschraube (3) innerhalb der halbkreisförmigen Nut (6) gesichert ist.

7. Struktur (1) nach Anspruch 2 oder 3, wobei die einzelnen Abschnitte der Klingen (12 und 12'), die durch die Schlitze (11) identifiziert sind, eine unterschiedliche Dicke und Konsistenz aufweisen.

8. Struktur (1) nach den vorhergehenden Ansprüchen, **dadurch gekennzeichnet, dass** sie mindestens einen kreisförmigen Abschnitt (7) aufweist, der mindestens eine Aufnahme (14) aufweist, die zum Einsetzen mindestens einer konischen Schraube (13) angepasst ist, sowohl in dem Fall, in dem das Messer (8) einen einzelnen Körper darstellt, als auch in dem Fall, in dem es anpassbar ist, wobei die Aufnahme(n) (14) in der Mitte des kreisförmigen Abschnitts (7) und/oder in der Mitte mindestens einer Verbindung (16), die zwischen zwei aufeinanderfolgenden Messern (9) vorhanden ist, ist oder sind.

9. Struktur (1) nach den vorhergehenden Ansprüchen, **dadurch gekennzeichnet, dass** die Aufnahme(n) (14) der konischen Schraube(n) (13) für Letztere von dem Zwischenraumabschnitt aus, in dem die Klingen (12 und 12') den spitzen Winkel definieren, zugänglich ist.

## Revendications

1. Structure (1) pour couteaux de coupe dotée d'un trou central (2) adapté pour recevoir l'axe de rotation (10), d'une structure solide circulaire (4) périphérique audit trou central (2), une pluralité de supports radiaux pour couteaux (5) reliés de façon stable par le point (15) de liaison à ladite structure solide circulaire (4), lesdits supports radiaux pour couteaux (5) étant adaptés pour recevoir au moins un couteau de coupe (8), ledit couteau de coupe (8) ayant une structure en V constituée par au moins deux lames (12 et 12') assemblées l'une à l'autre par une partie circulaire (7), dans laquelle lesdits supports radiaux pour couteaux (5) sont dotés le long de leur longueur d'au moins une gorge semi-circulaire (6) adaptée pour recevoir dans celle-ci la partie circulaire (7) d'au moins un couteau de coupe (8), ladite partie circulaire (7) et chaque lame (12 et 12') étant dotée d'au moins une fente (11) qui traverse partiellement le corps desdites lames (12 et 12').

2. Structure (1) selon les revendications précédentes, dans laquelle sur les lames (12 et 12') du couteau de coupe (8), les fentes (11) traversent complètement la totalité de l'épaisseur des lames (12 et 12') générant une pluralité de lames indépendantes assemblées ensemble pour la partie circulaire (7) seule.

3. Structure (1) selon les revendications précédentes dans laquelle les couteaux de coupe (8) peuvent être modulés, lesdits couteaux (8) comprenant une pluralité de couteaux (9) à l'intérieur de la gorge longitudinale (6) de sorte que plusieurs puissent s'insérer progressivement dans chaque gorge longitudinale (6).

4. Structure (1) selon les revendications précédentes dans laquelle la fente (11), quelle que soit sa profondeur, traverse perpendiculairement, transversalement ou obliquement, la lame (12) ou la lame (12') du couteau de coupe (8).

5. Structure (1) selon la revendication précédente dans laquelle la fente (11) est remplie d'un polymère plastique, éventuellement de silicone.

6. Structure (1) selon les revendications précédentes dans laquelle la partie circulaire (7) du couteau de coupe (8) est bloquée à l'intérieur de la gorge semi-circulaire (6) grâce à au moins une vis de retenue commune (3).

7. Structure (1) selon la revendication 2 ou 3 dans laquelle les parties individuelles de lames (12 et 12') identifiées par les fentes (11) ont une épaisseur et une consistance différentes.

8. Structure (1) selon l'une quelconque des revendications précédentes, **caractérisée en ce qu'**elle comprend au moins une partie circulaire (7) comportant au moins un logement (14) adapté pour l'insertion d'au moins une vis conique (13), à la fois dans le cas où le couteau (8) représente un corps unique, et dans celui où il peut être modulé, ledit/lesdits logement(s) (14) étant au centre de la partie circulaire (7) et/ou au centre d'au moins un joint (16) présent entre deux couteaux consécutifs (9).

9. Structure (1) selon la revendication précédente, **caractérisée en ce que** le(s) logement(s) (14) de la/des vis conique(s) (13) est/sont accessible(s) à celle(s)-ci depuis la partie d'espace dans laquelle les lames (12 et 12') définissent l'angle aigu.
